# EUROPEAN PATENT APPLICATION

(11) **EP 2 535 611 A1**
(43) Date of publication of application: **19.12.2012**
(21) Application number: 11742209.7
(22) Date of filing: 08.02.2011
(51) Int. Cl.: F16D 3/205

(54) **SLIDING TRIPOD CONSTANT VELOCITY JOINT**

(30) Priority: 09.02.2010 JP 2010026713
(71) Applicant: JTEKT Corporation, Osaka-shi, Osaka 542-8502 (JP)
(72) Inventor: OOISO, Kenji, Osaka-shi Osaka 542-8502 (JP); MATSUNO, Yutaka, Osaka-shi Osaka 542-8502 (JP); SAKAI, Yoshinari, Osaka-shi Osaka 542-8502 (JP)
(74) Representative: TBK
(86) International application number: PCT/JP2011/052597
(87) International publication number: WO 2011/099465

(57) **Abstract**

Provided is a sliding-type tripod constant velocity joint which is capable of improving the durability of rollers and tripod shaft portions even though an outer ring is deformed by power transmission.

Each raceway groove of an outer ring and each roller establishes angular contact therebetween. The section shape in a radial direction of the raceway groove of the outer ring is formed to an arc shape made by a first curvature radius centered at a first position. A longitudinal section shape of a first contact region on the roller is formed to a convex curve made by a second curvature radius which is centered at a second position differing from the first position and which is smaller than the first curvature radius. A longitudinal section shape of a second contact region of the roller is formed to a convex curve made by a third curvature radius which is centered at a third position differing from the first position and the second position and which is smaller than the first curvature radius. A longitudinal section shape between the first contact region and the second contact region of the roller has a gap relative to the raceway groove.

## Description

### FIELD OF THE INVENTION

The present invention relates to a sliding-type tripod constant velocity joint.

### BACKGROUND ART

As sliding-type tripod constant velocity joints, there are those disclosed in, for example, JP3-1528 B and JP3-121228 A (utility model). The constant velocity joints takes a construction that a plurality of rolling elements are interposed between each tripod shaft portion and each roller, and the rollers are inserted into raceway grooves of an outer ring. Further, in the aforementioned published documents, as the state of contact between the outer circumferential surface of the roller and the raceway groove of the outer ring, there are disclosed circular contact wherein a contact is made at one region, and angular contact wherein contacts are made at two regions. Then, it is described that the angular contact is reduced in the induced cyclic axial load which is exerted in the axial direction of the outer ring, in comparison with the circular contact. The induced cyclic axial load makes the cause of the vibration of a vehicle body as well as the generation of a noise and hence, influences the NVH performance of the vehicle.

### SUMMARY OF THE INVENTION

### PROBLEM TO BE SOLVED BY THE INVENTION

By the way, an outer ring constituting a tripod constant velocity joint is formed with raceway grooves at three places. Thus, the shape of the outer ring takes a special shape. Therefore, the rigidity at the raceway groove of the outer ring differs in dependence on regions thereon. As a result, when the transmission of a large power is performed between the raceway grooves of the outer ring and rollers through rotation of the constant velocity joint, the outer ring is deformed by the load received form the rollers. Further, where the contact between each raceway groove of the outer ring and each roller is established as angular contact, the regions where the roller contacts the raceway groove of the outer ring at the outer circumferential surface thereof are changed by the deformation of the outer ring. This results from the cause that the deformation of the outer ring changes the relative position of the raceway groove of the outer ring with respect to the outer circumferential surface of the roller.

When the regions where the roller contacts the raceway groove of the outer ring at the outer circumferential surface thereof are changed as described above, the reaction forces that the roller in angular contact receives from the raceway groove of the outer ring at respective contact positions change from a desired ratio that depends on the power to be transmitted between the both members, the joint angle, the rotational phase of the tripod and the like. If this occurs, the reaction force that the roller receives from the raceway groove at one of the respective contact positions is increased, whereby the stress exerted on one part of the roller increases. The increase in the stress exerted on the roller naturally makes the cause of deterioration in the durability of the roller. Furthermore, the load which is transmitted from the roller to the tripod shaft portion through rolling elements also changes, and this also becomes the cause of deterioration in the durability of the tripod shaft portion. Although it is conceivable that the thickness of the outer ring is enlarged not to let the outer ring deform, there arises a problem that the outer ring is increased in dimension.

The present invention has been made taking the foregoing circumstances into consideration, and an object thereof is to provide a sliding-type tripod constant velocity joint that is capable of improving the durability of rollers and tripod shaft portions even through an outer ring is deformed by power transmission.

### MEASURES FOR SOLVING THE PROBLEM

A sliding-type tripod constant velocity joint according to the present invention is a tripod constant velocity joint comprising:
an outer ring formed cylindrically and formed at an inner circumferential surface thereof with three raceway grooves extending in a direction of an outer ring rotational axis;
a tripod provided with a boss portion connected to a shaft and three tripod shaft portions which are upstanding from an outer circumferential surface of the boss portion to respectively extend radially outward of the boss portion and which are respectively inserted into the raceway grooves; and
rollers formed annularly, rotatably supported on the outer circumferential sides of the respective tripod shaft portions, and arranged to be rollable on the raceway grooves; wherein:
   the raceway groove of the outer ring and the outer circumferential surface of the roller contact each other at two regions establishing angular contact;
   a section shape of the raceway groove of the outer ring in a direction orthogonal to the outer ring rotational axis is formed to an arc shape made by a first curvature radius centered at a first position;
   within the outer circumferential surface of the roller, a section shape in an axial direction of the roller at a first contact region where the roller contacts the raceway groove is formed to a convex curve made by a second curvature radius which is centered at a second position differing from the first position and which is smaller than the first curvature radius;
   within the outer circumferential surface of the roller, a section shape in the axial direction of the roller at a second contact region where the roller contacts the raceway groove is formed to a convex curve made by a third curvature radius which is centered at a third position differing from the first position and the second position and which is smaller than the first curvature radius; and
   within the outer circumferential surface of the roller, a section shape between the first contact region and the second contact region in the axial direction of the roller is formed to have a gap relative to the raceway groove.

Thus, even if the outer ring is deformed when a power is transmitted between the roller and the raceway groove of the outer ring, an arc center point (the first position) only moves and the relative shape of the raceway groove of the outer ring to the roller does not change, because the raceway groove of the outer ring is formed to the arc shape made by the first curvature radius. Therefore, even if the outer ring is deformed, the regions where the roller contacts the raceway groove of the outer ring remain always at the same regions. As a result, the roller receives the reaction forces from the raceway groove of the outer ring at always the same positions (the first contact region and the second contact region). For this reason, even if the outer ring is deformed, the reaction forces that the respective contact regions of the roller receive from the raceway groove of the outer ring become a desired ratio depending on the power to be transmitted, the joint angle, the rotational phase of the tripod and the like and can be restrained from being changed by the deformation of the outer ring. Accordingly, since the variation of the stress exerted on the roller is suppressed, the durability of the roller can be improved. Furthermore, as a result that the variation of the stress exerted on the roller is suppressed, the durability of the tripod shaft portion can also be improved.

Further, when a power is transmitted between the roller and the raceway groove, the shape of a contact surface where each of the first contact region and the second contact region on the outer circumferential surface of the roller contacts the raceway groove may be formed to a circle or an ellipse shape.

That is, the shape of the contact surface between the roller and the raceway groove of the outer ring is formed to take the circle or ellipse shape. Here, when the roller and the raceway of the outer ring contact, both of them are elastically deformed slightly. Thus, they do not contact by a point, but contact by a surface. Then, by making the shape of the contact surface take the circle or ellipse shape as is the case of the present invention when the contact by a surface is made, the contact surface becomes the state wherein it does not lack any part. The lack of a part of the contact surface means the state that an extent in which the contact can inherently be made is disconnected. Then, where the lack of a part on the contact surface takes place, the stress is concentrated on the part lacking, which is thus subjected to a large stress. However, according to the present invention, the concentration of the stress can be avoided. Consequently, the durability of the roller can be improved.

Further, in the section of the outer circumferential surface of the roller in the axial direction of the roller, a space between the first contact region and the second contact region may be formed to be connected by a curve which is continuous to the first contact region and the second contact region.
Thus, the shape of the contact surfaces between the roller and the raceway groove of the outer ring can be formed to take a circular shape or an ellipse shape. Therefore, the concentration of the stress on the roller can be avoided. Consequently, the durability of the roller can be improved.

Further, in the section of the outer circumferential surface of the roller in the axial direction of the roller, the shape between the first contact region and the second contact region may be formed to an arc shape centered at a fourth position which is radially outside of the outer circumferential surface of the roller.
Thus, the extents for the first contact region and the second contact region on the outer circumferential surface of the roller can be secured widely. Therefore, it is possible to ensure that the shape of the contact surfaces between the roller and the raceway groove of the outer ring takes a circular shape or an ellipse shape. Therefore, the concentration of the stress on the roller can be avoided. Consequently, the durability of the roller can be improved.

Further, the sliding-type tripod constant velocity joint may be configured to enable the roller to rock relative to the raceway groove.
In other words, this corresponds to the state that the axis of the roller always fluctuates in the angle made relative to the direction (the rotational axis of the outer ring) in which the raceway groove of the outer ring extends. In the construction like this, the raceway groove of the outer ring is formed to an arc shape made by the same curvature radius, and thus, even when the roller is rocked relative to the raceway groove of the outer ring, the regions where the roller contacts the raceway groove of the outer ring at the outer circumferential surface thereof remain always at the same regions (the first contact region and second contact region). Accordingly, even in the constant velocity joint of the construction like this, the variation of the stress exerted on the roller can be suppressed, and hence, the durability of the roller can be improved.

Further, the sliding-type tripod constant velocity joint may further comprise a plurality of shaft-like rolling elements which are interposed to be rollable between the outer circumferential surface on each of the tripod shaft portions and the inner circumferential surface of the roller, and the roller may be provided movably relative to the tripod shaft portion in the axial direction of the tripod shaft portion and may be provided to be restrained from rocking relative to the tripod shaft portion.

That is, the roller is constructed to rock relative to the raceway groove of the outer ring. Even where the present invention is applied to a constant velocity joint of the construction like this, the same so applied can reliably suppress the variation of the stress exerted on the roller.

### BRIEF DESCRIPTION OF THE DRAWINGS

[Figure 1] first embodiment: is a sectional view in a radial direction of a part of a constant velocity joint.
[Figure 2] is an enlarged fragmentary sectional view of a roller 30 in the axial direction.
[Figure 3] is a front view of the roller 30, showing first and second contact regions Ta, Tb.
[Figure 4] first embodiment: (a) is a view showing contact regions between a raceway groove 11 of an outer ring 10 and the roller 30 where a transmitted power is in a usual range of use. (b) is a view showing the contact regions between the raceway groove 11 of the outer ring 10 and the roller 30 where the transmitted power is very larger than that in the usual range of use.
[Figure 5] compared example: (a) is a view showing contact regions between a raceway groove 111 of an outer ring 110 and a roller 330 where a transmitted power is in a usual range of use. (b) is a view showing contact regions between the raceway groove 111 of the outer ring 110 and the roller 330 where the transmitted power is very larger than that in the usual range of use.
[Figure 6] second embodiment: is an enlarged fragmentary sectional view of a roller 130 in the axial direction.
[Figure 7] third embodiment: is an enlarged fragmentary sectional view of a roller 230 in the axial direction.

### FORMS FOR PRACTICING THE INVENTION

### <First Embodiment>

### (Construction of Sliding-Type Tripod Constant Velocity Joint)

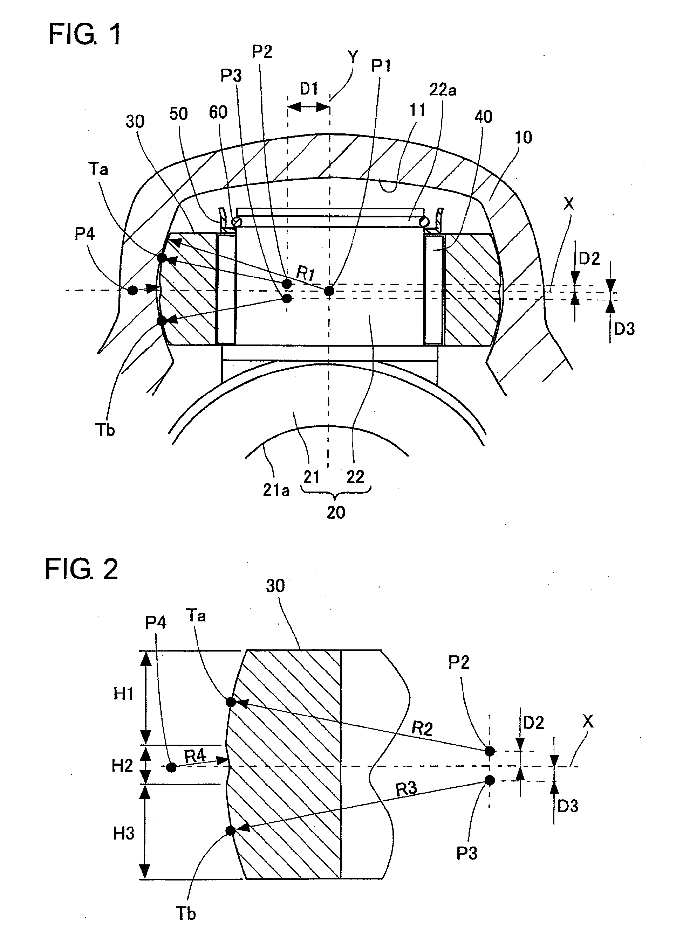

A sliding-type tripod constant velocity joint in a first embodiment will be described with reference to Figure 1. The sliding-type tripod constant velocity joint is used for, for instance, the coupling between power transmitting shafts in a vehicle. Specifically, it is used at a coupling portion between a shaft portion connected to a differential gear and a driving shaft.
The sliding-type tripod constant velocity joint is composed of an outer ring 10, a tripod 20, rollers 30, a plurality of shaft-like rolling elements 40, retainers 50, and snap rings 60.

The outer ring 10 is formed to a bottomed cylindrical shape, and the outer ring 10 is connected to the differential gear on the outer side of the bottom surface thereof. Three raceway grooves 11 extending in the rotational axis direction of the outer ring 10 are formed on an inner circumferential surface of the outer ring 10 at regular intervals. Figure 1 shows one raceway groove 11 only. The section shape in the direction orthogonal to the outer ring rotational axis of groove side surfaces on both sides of the raceway groove 11 takes an arc shape of a first curvature radius R1 centered at a first position P1 which is on the central axis of a tripod shaft portion 22. Here, the central axis of the tripod shaft portion 22 passing through the first position P1 when the joint angle is 0 degree is referred to as Y-axis, and the axis passing through the first position P1 and being orthogonal to the outer ring rotational axis as well as to the Y-axis is referred to as X-axis.

The tripod 20 is arranged inside of the outer ring 10. The tripod 20 is provided with a boss portion 21 and three tripod shaft portions 22. The boss portion 21 takes a cylindrical shape and is formed with an internal spline gear 21 a on the inner circumferential side. The internal spline gear 21 a meshes with an external spline gear on an end portion of a driving shaft (not shown). Further, the outer circumferential surface of the boss portion 21 is formed to an almost spherical convex shape.

The respective tripod shaft portions 22 are upstanding from the outer circumferential surface of the boss portion 21 to extend respectively in radially outward directions of the boss portion 21. These tripod shaft portions 22 are formed at equiangular distances (120-degree intervals) in the circumferential direction of the boss portion 21. Then, at least end portions of the respective tripod shaft portions 22 are inserted into the respective raceway grooves 11 of the outer ring 10. Further, ring grooves 22a are formed on the end portion sides of the tripod shaft portions 22 over the whole circumference in the circumferential direction.

Each roller 30 is formed annularly. Specifically, the inner circumferential surface of the roller 30 is formed as a cylindrical inner circumferential surface. That is, the section shape in the roller axis direction at the inner circumferential surface of the roller 30 is formed to be straight in parallel to the roller axis. The section shape in the roller axis direction (the vertical direction in Figure 1) of the outer circumferential surface of the roller 30 takes a curved convex shape being convex radially outward.
Each roller 30 is supported on the outer circumferential side of the tripod shaft portion 22 through the plurality of shaft-like rolling elements 40. That is, the shaft-like rolling elements 40 are interposed between the outer circumferential surface of the tripod shaft portion 22 and the inner circumferential surface of the roller 30. Then, the shaft-like rolling elements 40 roll on the outer circumferential surface of the tripod shaft portion 22 and the inner circumferential surface of the roller 30.

Thus, the roller 30 is provided rotatably about the tripod axis (the central axis of the tripod shaft portion 22: in the vertical direction in Figure 1) through the plurality of shaft-like rolling elements 40. Further, the roller 30 is provided movably relative to the tripod shaft portion 22 in the tripod axis direction and is provided to be restrained from locking relative to the tripod shaft portion 22. The roller 30 is inserted in the raceway groove 11 and is engaged with the raceway groove 11 to be rollable thereon.

The retainer 50 is on the outer circumferential side of the tripod shaft portion 22 and is arranged to be piled up above the shaft-like rolling elements 40 in Figure 1. The retainer 50 has a role of preventing the shaft-like rolling elements 40 from coming off. The retainer 50 is held by the snap ring 60 securely engaged with the ring groove 22a of the tripod shaft portion 22 not to come off from the tripod shaft portion 22.

### (Detailed Shape of Outer Circumferential Surface of Roller 30)

The details of the section shape in the roller axis direction of the outer circumferential surface of the roller 30 will be described with reference to Figure 2 in addition to Figure 1. The section shape in the roller axis direction (in the vertical direction in Figure 1) of the outer circumferential surface of the roller 30 is formed to a convex curved shape being convex in the radially outward direction.

Within the outer circumferential surface of the roller 30, an extent H1 on one end surface (the upper end surface in Figure 2) side in the axial direction of the roller 30 is formed to an arc shape of a second curvature radius R2 centered at a second position P2. Here, as shown in Figure 1, the second position P2 is offset by a distance D1 outward in the radial direction of the roller 30 relative to the Y-axis passing through the first position P1. Further, the second position P2 is offset by a distance D2 toward the one end surface side in the axial direction of the roller 30 relative to the X-axis passing through the first position P1. That is, the second curvature radius R2 is shorter by (√ (D1 ^ 2 + D2 ^ 2) + α) than the first curvature radius R1. The symbol α is the dimension of a clearance necessary to insert the roller 30 in the raceway groove 11.

Within the outer circumferential surface of the roller 30, an extent H3 on the other end surface (the lower end surface in Figure 2) side in the axial direction of the roller 30 is formed to an arc shape of a third curvature radius R3 centered at a third position P3. Here, as shown in Figure 1, the third position P3 is offset by the distance D1 outward in the radial direction of the roller 30 relative to the Y-axis passing through the first position P1. Further, the third position P3 is offset by a distance D3 toward the other end surface side in the axial direction of the roller 30 relative to the X-axis passing through the first position P1. That is, the third curvature radius R3 is shorter by (√ (D1 ^ 2 + D3 ^ 2) + α) than the first curvature radius R1. In the present embodiment, the second curvature radius R2 and the third curvature radius R3 are set to be equal. Further, the lengths of the extents H1 and H3 are set to be equal.

Then, within the outer circumferential surface of the roller 30, an extent H2 residing between the extent H1 and the extent H3 is an extent crossing the X-axis and is formed to an arc shape of a fourth curvature radius R4 centered at a fourth position P4. The fourth position P4 is positioned radially outside of the outer circumferential surface of the roller 30 and resides on the X-axis. The fourth curvature radius R4 is set to be very small in comparison with the first to third curvature radii R1-R3.

Furthermore, the extent H1 and the extent H2 are set to have the same tangential line at the boundary therebetween, and the extent H2 and the extent H3 are set to have the same tangential line at the boundary therebetween. Thus, in the section in the roller axis direction of the outer circumferential surface of the roller 30, the space between the extents H1 and H3 is connected by a very smooth continuous curved line.

### (Contact Regions between Roller 30 and Raceway Groove 11 of Outer Ring 10)

Next, with reference to Figures 1-3, description will be made regarding contact regions between the outer circumferential surface of the aforementioned roller 30 and the raceway groove 11 of the outer ring 10. Because the outer circumferential surface shape of the roller 30 takes the aforementioned shape, the outer circumferential surface of the roller 30 and the raceway groove 11 of the outer ring 10 contacted each other at two regions Ta, Tb establishing angular contact. Here, since the curvature radii R2, R3 of the extents H1, H3 on the roller 30 are made to be equal, the contact angle at the first contact region Ta and the contact angle at the second contact region Tb become the same. The contact angle means the acute angle that a normal line to the contact surface at the contact region makes with the X-axis. However, the respective contact angles are not limited to the same and may be properly changed. Furthermore, the extent H2 on the outer circumferential surface of the roller 30 takes the aforementioned form and hence, in the extent H2, the roller has a gap between itself and the raceway groove 11 of the outer ring 10.

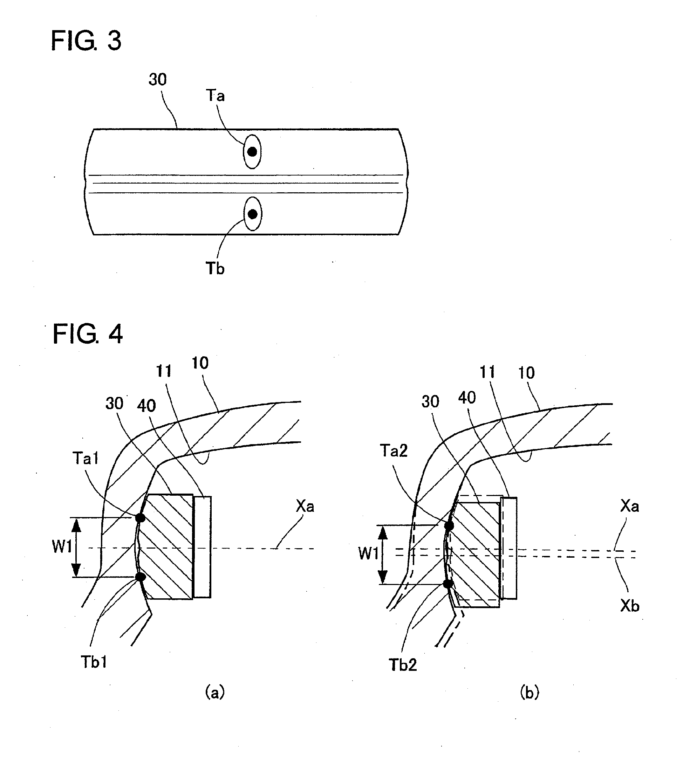

Here, the raceway groove 11 of the outer ring 10 is formed to an arc concave shape, while the respective contact regions on the roller 30 are each formed to an arc convex shape. Further, when a power is transmitted between the roller 30 and the raceway groove 11 of the outer ring 10, the roller 30 and the outer ring 10 are deformed elastically. As a result, as shown in Figure 3, the contact surfaces of the first and second contact regions Ta, Tb each become an ellipse shape. Particularly, by setting the extent H2 as mentioned above in the section in the roller axis direction of the outer circumferential surface of the roller 30, it is possible to form the contact surface shape of the first and second contact regions Ta, Tb to an ellipse shape that does not lack in any part thereof.

### (Contact Positions between Raceway Groove 11 of Outer Ring 10 and Roller 30 at the Time of Power Transmission)

Next, with reference Figures 4(a) and 4(b), description will be made regarding the contact positions between the raceway groove 11 of the outer ring 10 and the roller 30 at the time of a power transmission. Figure 4 (a) shows that the transmitted power is in a usual range of use, and Figure 4 (b) shows the case that the transmitted power has become very larger than that in the usual range of use.

In the case that the transmitted power is in the usual range of use, as a shown in Figure 4(a), the first contact region becomes Ta1, and the second contact region becomes Tb1. These Ta1 and Tb1 are the same as the first and second contact regions Ta, Tb in Figures 1 and 2. In this case, the spaced distance between the first contact region Ta1 and the second contact region Tb1 becomes W1.

Then, where the transmitted power increases very larger than that in the usual range of use, as shown in Figure 4 (b), the outer ring 10 is deformed. The outer ring 10 has the raceway grooves 11 at the 120-degree intervals and takes a special form. Therefore, when each raceway groove 11 of the outer ring 10 receives a load from the roller 30, the raceway groove 11 of the outer ring 10 is hardly deformed on the groove bottom side, but is largely deformed radially outward on the opening side. Even in the state that the outer ring 10 is deformed like this, the shape of the raceway groove 11 remains in the arc shape having the first curvature radius R1. However, the first position P1 is displaced.

At this time, the roller 30 is moved with the displacement of the first position P1. The state at this time becomes as shown in Figure 4 (b). That is, the relative shape of each raceway groove 11 to the outer circumferential surface of the roller 30 is the same before and after the deformation of the outer ring 10. Accordingly, the first and second contact regions Ta2, Tb2 on the outer circumferential surface of the roller 30 relative to the raceway groove 11 of the outer ring 10 remain at the same position before and after the deformation of the outer ring 10. That is, the spaced distance between the first contact region Ta2 and the second contact region Tb2 after the deformation of the outer ring 10 remains the same as the spaced distance W1 between the first contact region Ta2 and the second contact region Tb2 after deformation of the outer ring 10.

Like this, even if the outer ring 10 is deformed when a power is transmitted between the roller 30 and the raceway 11 of the outer ring 10, the regions where the outer circumferential surface of the roller 30 contacts the raceway groove 11 of the outer ring 10 remain to be always the same regions. As a result, the reaction forces that the roller 30 receives from the raceway groove 11 of the outer ring 10 come from always the same positions (the first contact region Ta and the second contact region Tb). For this reason, even if the outer ring 10 is deformed, the reaction forces that the respective contact regions Ta, Tb of the roller 30 receive from the raceway groove 11 of the outer ring 10 become a desired ratio depending on the power to be transmitted, the joint angle, the rotational phase of the tripod 20 and the like and can be restrained from being changed by the deformation of the outer ring 10. Accordingly, since the variation in the stress exerted on the roller 30 can be suppressed, the durability of the roller 30 can be improved. Furthermore, being capable of suppressing the variation in the stress exerted on the roller 30 also results in improving the durability of the tripod shaft portion 22.

Particularly, in the present embodiment, by setting the extent H2 on the outer circumferential surface of the roller 30 to be the fourth curvature radius R4 centered at the fourth position P4, it is possible to secure the extents for the first contact region Ta and the second contact region Tb widely on the outer circumferential surface of the roller 30. Thus, it can be ensured that the shape of the contact surfaces between the roller 30 and the raceway groove 11 of the outer ring 10 is made as an ellipse shape. Accordingly, it is possible to avoid the concentration of the stress on the roller 30. Accordingly, the durability of the roller 30 can be improved.

### (Compared Example)

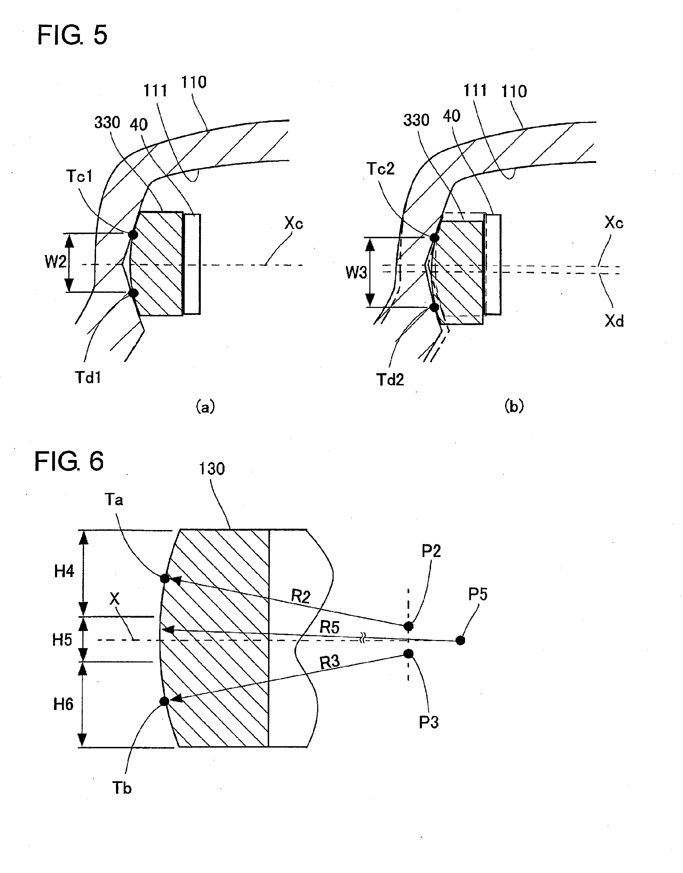

Here, in order to clarify the form in the aforementioned embodiment, a compared example will be described with reference to Figures 5(a) and 5(b). Figure 5(a) shows that the transmitted power is in a usual range of use, and Figure 5(b) shows the case that the transmitted power has become very larger than that in the usual range of use. In the present compared example, the outer circumferential surface of a roller 330 is formed to the same arc convex shape, and the side surface of each raceway groove 111 of an outer ring 110 is formed by two flat surfaces to take "<" shape. This is the shape described in Figure 4 of JP3-1528 B.

In this case, as shown in Figure 5(a), when the transmitted power is in the usual range of use, the spaced distance between a first contact region Tc1 and a second contact region Td1 that reside between the outer circumferential surface 110 of the roller 330 and the raceway groove 111 of the outer ring 110 becomes W2. Then, when the transmitted power is very larger than that in the usual range of use, the outer ring 110 is deformed as shown in Figure 5(b). The deformation of the outer ring 110 causes the relative position between the roller 330 and the raceway groove 111 of the outer ring 110 to change.

Specifically, the first and second contact regions between the outer circumferential surface of the roller 330 and the raceway groove 111 of the outer ring 110 move to Tc2, Td2. The first contact region Tc2 on the roller 330 moves to a position which differs from the first contact region Tc1 on the roller 330. Further, the first contact region Tc2 on the roller 330 moves to a position which differs from the first contact region Tc1 on the roller 330. Then, when the transmitted power is very larger than that in the usual range of use, the spaced distance between the first contact region Tc2 and the second contact region Td2 that reside between the outer circumferential surface of the roller 330 and the raceway groove 111 of the outer ring surface 110 becomes W3 that is larger than W2.

Like this, when an increase in the transmitted power causes the outer ring 110 to deform, the positions of loads that the roller 330 receives from the raceway groove 111 of the outer ring 110 are changed, whereby the stress exerted on the roller 330 is varied. As a result, the durability of the roller 330 is deteriorated. Furthermore, the durability of the tripod shaft portion is also deteriorated.

### <Second Embodiment>

With reference to Figure 6, description will be made regarding a roller 130 constituting a sliding-type tripod constant velocity joint in a second embodiment. The same components as those in the first embodiment are given the same difference numerals, and the description thereof will be omitted.
Within the outer circumferential surface of the roller 130, an extent H4 on one end surface (the upper end surface in Figure 6) side in the axial direction of the roller 130 is formed to an arc shape of the second curvature radius R2 centered at the second position P2. Within the outer circumferential surface of the roller 130, an extent H6 on the other end surface (the lower end surface in Figure 6) side in the axial direction of the roller 130 is formed to an arc shape of the third curvature radius R3 centered at the third position P3. Further, the lengths of the extents H4 and H6 are set to be equal.

Then, within the outer circumferential surface of the roller 130, an extent H5 residing between the extent H4 and the extent H6 is an extent crossing the X-axis and is formed to an arc shape of a fifth curvature radius R5 centered at a fifth position P5. The fifth position P5 is located radially inside of the outer circumferential surface of the roller 130 and resides on the X-axis. The fifth curvature radius R5 is set to be larger than the first curvature radius R1.

Further, the extent H4 and the extent H5 are set to have the same tangential line at the boundary therebetween, and the extent H5 and the extent H6 are set to have the same tangential line at the boundary therebetween. Thus, in the section in the roller axis direction of the outer circumferential surface of the roller 130, the space between the extents H4 and H6 is connected by a very smooth continuous curved line.

### <Third Embodiment>

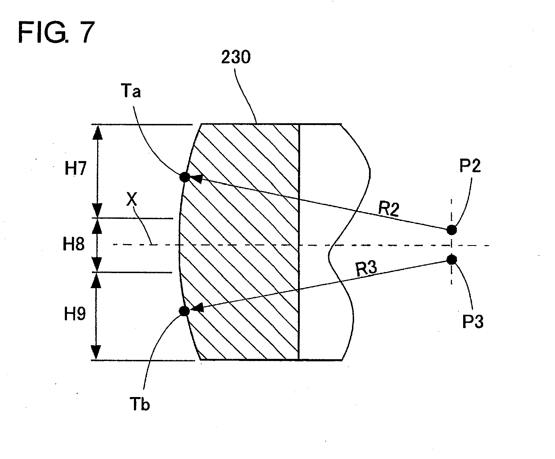

With reference to Figure 7, description will be made regarding a roller 230 constituting a sliding-type tripod constant velocity joint in a third embodiment. The same components as those in the first embodiment are given the same difference numerals, and the description thereof will be omitted.

Within the outer circumferential surface of the roller 230, an extent H7 on one end surface (the upper end surface in Figure 7) side in the axial direction of the roller 230 is formed to an arc shape of the second curvature radius R2 centered at the second position P2. Within the outer circumferential surface of the roller 230, an extent H9 on the other end surface (the lower end surface in Figure 7) side in the axial direction of the roller 230 is formed to an arc shape of the third curvature radius R3 centered at the third position P3. Further, the lengths of the extents H7 and H9 are set to be equal.

Then, within the outer circumferential surface of the roller 230, an extent H8 residing between the extent H7 and the extent H9 is an extent crossing the X-axis and is formed to take a straight shape parallel to the Y-axis. Further, the extent H7 and the extent H8 are set to have the same tangential line at the boundary therebetween, and the extent H8 and the extent H9 are set to have the same tangential line at the boundary therebetween.

### <Others>

In the foregoing embodiments, on the outer circumferential surfaces of the rollers 30, 130 and 230, the extents H1, H3, H4, H6, H7, H9 have been formed to the arc concave shape of the same radius. Besides, the respective extents may be formed to take ellipse shapes or involute curves.

### DESCRIPTION OF SYMBOLS

10, 110...outer ring, 11, 111...raceway groove,
20...tripod, 21...boss portion, 21a...spline internal gear,
22...tripod shaft portion, 22a...ring groove,
30, 130, 230, 330...roller,
40...shaft-like rolling element, 50...retainer, 60...snap ring,
P1...first position, P2...second position, P3...third position,
P4...fourth position, P5...fifth position,
R1... first curvature radius, R2...second curvature radius, R3...third curvature radius,
R4...fourth curvature radius, R5...fifth curvature radius,
Ta...first contact region, Tb...second contact region

## Claims

1. A sliding-type tripod constant velocity joint comprising:
an outer ring formed cylindrically and formed at an inner circumferential surface thereof with three raceway grooves extending in a direction of an outer ring rotational axis;
a tripod provided with a boss portion connected to a shaft and three tripod shaft portions which are upstanding from an outer circumferential surface of the boss portion to respectively extend radially outward of the boss portion and which are respectively inserted into the raceway grooves; and
rollers formed annularly, rotatably supported on the outer circumferential sides of the respective tripod shaft portions, and arranged to be rollable on the raceway grooves; wherein:
the raceway groove of the outer ring and the outer circumferential surface of the roller contact each other at two regions establishing angular contact;
a section shape of the raceway groove of the outer ring in a direction orthogonal to the outer ring rotational axis is formed to an arc shape made by a first curvature radius centered at a first position;
within the outer circumferential surface of the roller, a section shape in an axial direction of the roller at a first contact region where the roller contacts the raceway groove is formed to a convex curve made by a second curvature radius which is centered at a second position differing from the first position and which is smaller than the first curvature radius;
within the outer circumferential surface of the roller, a section shape in the axial direction of the roller at a second contact region where the roller contacts the raceway groove is formed to a convex curve made by a third curvature radius which is centered at a third position differing from the first position and the second position and which is smaller than the first curvature radius; and
within the outer circumferential surface of the roller, a section shape between the first contact region and the second contact region in the axial direction of the roller is formed to have a gap relative to the raceway groove.

2. The sliding-type tripod constant velocity joint in Claim 1, wherein:
when a power is transmitted between the roller and the raceway groove, the shape of a contact surface where each of the first contact region and the second contact region on the outer circumferential surface of the roller contacts the raceway groove is formed to a circle or an ellipse shape.

3. The sliding-type tripod constant velocity joint in Claim 2, wherein:
in the section of the outer circumferential surface of the roller in the axial direction of the roller, a space between the first contact region and the second contact region is formed to be connected by a curve which is continuous to the first contact region and the second contact region.

4. The sliding-type tripod constant velocity joint in Claim 3, wherein:
in the section of the outer circumferential surface of the roller in the axial direction of the roller, a shape of the space between the first contact region and the second contact region is formed to an arc shape centered at a fourth position which is radially outside of the outer circumferential surface of the roller.

5. The sliding-type tripod constant velocity joint in any one of Claims 1 to 4, wherein:
the sliding-type tripod constant velocity joint is configured to enable the roller to rock relative to the raceway groove.

6. The sliding-type tripod constant velocity joint in Claim 5, wherein:
the sliding-type tripod constant velocity joint further comprises a plurality of shaft-like rolling elements which are interposed to be rollable between the outer circumferential surface on each of the tripod shaft portions and the inner circumferential surface of the roller; and
the roller is provided movably relative to the tripod shaft portion in the axial direction of the tripod shaft portion and is provided to be restrained from rocking relative to the tripod shaft portion.
